# EUROPÄISCHE PATENTSCHRIFT

(11) **EP 1 687 353 B1**
(45) Veröffentlichungstag und Bekanntmachung des Hinweises auf die Patenterteilung: **24.07.2019**
(21) Anmeldenummer: 04818782.7
(22) Anmeldetag: 16.11.2004
(51) Int. Cl.: C08G 18/08, C09J 175/04, C08G 18/10, C09J 163/02, C08G 18/70, C08G 18/76, C08G 18/42, C09J 163/00

(54) **KASCHIERKLEBSTOFFE, ENTHALTEND POLYURETHAN UND EPOXIDHARZ**
LAMINATING ADHESIVES CONTAINING POLYURETHANE AND EPOXIDE RESIN
ADHESIFS DE CONTRE-COLLAGE CONTENANT UN POLYURETHANE ET UNE RESINE EPOXYDE

(30) Priorität: 18.11.2003 DE 10353953
(43) Veröffentlichungstag der Anmeldung: 09.08.2006
(73) Patentinhaber: BASF SE, 67056 Ludwigshafen am Rhein (DE)
(72) Erfinder: LICHT, Ulrike, 68309 Mannheim (DE); MEYER-ROSCHER, Bernd, 67434 Neustadt (DE); BURGHARDT, Andre, 67240 Bobenheim-Roxheim (DE)
(74) Vertreter: BASF IP Association
(86) Internationale Anmeldenummer: PCT/EP2004/012975
(87) Internationale Veröffentlichungsnummer: WO 2005/049683

(56) Entgegenhaltungen:
- EP-A- 0 324 370
- US-A- 5 532 058
- US-B1- 6 287 698
- DATABASE WPI Section Ch, Week 200420 Derwent Publications Ltd., London, GB; Class A28, AN 2004-205802 XP002321391 & JP 2003 221787 A (TORAY IND INC) 8. August 2003 (2003-08-08)
- PATENT ABSTRACTS OF JAPAN Bd. 1996, Nr. 09, 30. September 1996 (1996-09-30) & JP 08 113704 A (ASAHI DENKA KOGYO KK), 7. Mai 1996 (1996-05-07)

## Beschreibung

Die Erfindung betrifft die Verwendung von mit Kaschierklebstoff beschichteten Polymerfolien oder Papier für die Kaschierung von flächigen Substraten, wobei die mit Kaschierklebstoff beschichteten Polymerfolien oder Papier erhältlich sind durch Verwendung einer wässrige Zusammensetzung, enthaltend
- ein Polyurethan (A)
- ein Epoxidharz (B), erhältlich durch Umsetzung von Verbindungen mit Epoxidgruppen mit Di- oder Polyolen und
- einen Vernetzer für das Epoxidharz (C),.
wobei die wässrige Zusammensetzung dadurch erhältlich ist, dass das Polyurethan in einem Lösungsmittel hergestellt und anschließend in Wasser dispergiert wird, wobei das Epoxidharz der Lösung vor dem Dispergieren des Polyurethans in Wasser zugesetzt wird.

Weiterhin betrifft die Erfindung die Verwendung der beschichteten Folien oder Papiere zur Kaschierung von Substanzen aus Holz, Metall etc., insbesondere von Möbeln oder Automobilinnenteilen.

Polyurethandispersionen finden z.B. als Kaschierklebstoffe Verwendung.

Dabei wird im allgemeinen zunächst das Substrat, z.B. ein Möbelteil, mit dem Kaschierklebstoff beschichtet. Die erhaltenen Beschichtungen sind im allgemeinen zunächst nicht klebrig. Erst vor dem Kaschierprozess erfolgt eine Aktivierung des Klebstoffs, z.B. durch Wärmebehandlung oder Bestrahlung mit energiereichem Licht. Dabei schmelzen die kristallinen Polyestersegmente im Polyurethan und die Beschichtung wird klebrig. Nach dieser Aktivierung wird das 2. Substrat, im allgemeinen eine Papier- oder Polymerfolie aufgebracht.

Anforderungen, die an einen Kaschierklebstoff gestellt werden, sind eine hohe Festigkeit des erhaltenen kaschierten Verbundes, insbesondere eine hohe Wärmestandfestigkeit.

Gewünscht ist auch eine gute Verarbeitbarkeit des Klebstoffs.

Wenn möglich sollen diese Vorteile sowohl mit 1K als auch mit 2K-Systemen erreicht werden. 1K (ein-komponentige) Systeme enthalten bereits einen Vernetzer und sind lagerstabil), bei 2K (zwei-komponentige Systemen) wird der Vernetzer erst kurz vor der Verwendung des Klebstoffs zugesetzt.

Von besonderem Interesse sind 1 K-Systeme.

Insbesondere wäre es vorteilhaft, den Klebstoff auf die zu kaschierende Polymerfolie oder das Papier zu beschichten und diese lagerstabilen, beschichteten Papiere und Polymerfolien bis zur späteren Verwendung lagern zu können.

Aus EP-A-922720 und EP-A-100508 sind lagerstabile Polyurethanklebstoffe bekannt, welche als Vernetzer an der Oberfläche desaktivierte, feste Isocyanat-Partikel enthalten. Problematisch ist hier die Herstellung des Vernetzers; die Polyisocyanat-Partikel werden zunächst unter Sicherheitsvorkehrungen gemahlen und anschließend an der Oberfläche desaktiviert.

Aus EP-A-542072 ist die Herstellung eines Polyurethan-Epoxidharz-Gemisches durch Herstellung des Polyurethans in organischer Lösung, Zugabe des Epoxidharzes und anschließende Dispergierung in Wasser bekannt.

Aus der nicht vorveröffentlichten DE-A-10219687 (PF 53490) sind Gemische von Polyurethan mit Epoxidgruppen enthaltenden, durch radikalische Polymerisation erhältlichen Polymeren bekannt.
US 5532058 beschreibt Laminierklebstoffe auf Basis von wässrigen Polyurethandispersionen in Kombination mit bestimmten Vernetzern. Als Vernetzer kann auch eine Mischung von Polyepoxyverbindungen mit Polyaziridinen oder Polycarbodiimiden eingesetzt werden. Beschrieben werden 2-Komponenten-Laminierklebstoffe, bei denen der Vernetzer erst unmittelbar zum Zeitpunkt der Laminieranwendung der Polyurethandispersion zugesetzt wird.

Aufgabe der vorliegenden Erfindung waren Kaschierklebstoffe, welche die oben beschriebenen Vorteile aufweisen.

Demgemäß wurde die eingangs definierte Zusammensetzung und ihre Verwendung gefunden.

Die wässrigen Zusammensetzungen enthalten u.a. ein Polyurethan. Das Polyurethan liegt als in Wasser dispergiertes Polyurethan vor.

Die verwendeten Polyurethane enthalten insbesondere Diisocyanate a) und Diole b) als Aufbaukomponenten.

Insbesondere zu nennen sind als Diisocyanate solche der Formel X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol (TDI), 4,4'-Diisocyanato-diphenylmethan, 2,4'-Diisocyanato-diphenylmethan (MDI), p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen oder Carbodiimidgruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, β-Propiolacton, g-Butyrolacton und/oder Methyl-e-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500. Daneben können auch Mischungen aus Polyesterdiolen und Polyetherdiolen als Monomere (b1) eingesetzt werden.

Ebenfalls geeignet sind Polyhydroxyolefine, bevorzugt solche mit 2 endständigen Hydroxylgruppen, z.B. a,-w-Dihydroxypolybutadien, a,-w-Dihydroxypolymethacrylester oder a,-w-Dihydroxypolyacrylester als Monomere (c1). Solche Verbindungen sind beispielsweise aus der EP-A 0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane (I) lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane (I) zu erreichen, sind die Polyurethane neben den Komponenten (a), (b) und gegebenenfalls (d) auch aus von den Komponenten (a), (b) und (d) verschiedenen Monomeren (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3 905 929 und US-A 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁-bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (ci) 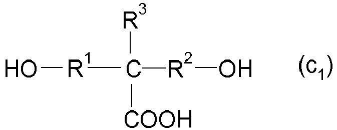 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 2034479 genannten Addukte von aliphatischen diprimären Diaminen an a,β-ungesättigte Carbon- oder Sulfonsäuren in Betracht.

Solche Verbindungen gehorchen beispielsweise der Formel (C₂)

H₂N-R⁴-NH-R⁵-X (C₂)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind. Ebenfalls gut geeignete Monomere c) sind Addukte von aliphatischen Diaminen, beispielsweise Ethylendiamin, oder aber Propylendiamin an Acrylate oder Methacrylate der Alkalimetalle, insbesondere von Natrium.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans (I) sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane (I) enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, cycloaliphatische Diisocyanate oder TMXDI und als Monomer (b1) im wesentlichen nur Polyesterdiole, aufgebaut aus den genannten aliphatischen Diolen und Disäuren, eingesetzt werden.

Diese Monomerkombination wird in hervorragender Weise ergänzt als Komponente (c) durch Diaminosäure-Salze; ganz besonders durch die N-(2-Aminoethyl)-2-aminoethansulfonsäure, die N-(2-Aminoethyl)-2-aminoethancarbonsäure bzw. ihre entsprechenden Alkalisalze, wobei die Na-Salze am besten geeignet sind, sowie durch die Dimethylolpropionsäure oder durch das Addukt von Ethylendiamin an Alkaliacrylate.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des in den wässrigen Dispersionen vorliegenden Polyurethans (I) kann bei Reaktionstemperaturen von 20 bis 180°C, bevorzugt 70 bis 150°C unter Normaldruck oder unter autogenem Druck erfolgen.

Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Die Umsetzung, d.h. die Polyaddition der Monomere a), b), c) sowie gegebenenfalls d) und e) zur Herstellung der Polyurethane (I) kann mit Hilfe von organischen oder von organometallischen Verbindungen katalysiert werden. Geeignete organometallische Verbindungen sind u.a. Dibutylzinndilaurat, Zinn-II-octoat oder Diazobicyclo-(2,2,2)-octan. Geeignete Katalysatoren der Umsetzung der Monomere a), b), c) sowie gegebenenfalls d) und e) sind auch Salze des Caesiums, insbesondere Ceasiumcarboxylate wie zum Beispiel das Formiat, Acetat, Propionat, Hexanoat oder das 2-Ethylhexanoat des Caesiums.

Als Polymerisationsapparate zur Durchführung der Polyaddition, d.h. der Umsetzung der Monomere a), b), c) sowie gegebenenfalls d) und e) kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das "Prepolymer-Mischverfahren" unterscheidet sich vom Acetonverfahren darin, daß nicht ein ausreagiertes (potentiell) ionisches Polyurethan, sondern zunächst ein Prepolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren.

Üblicherweise wird, falls bei der Herstellung des Polyurethans (I) ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Zusammensetzung enthält neben dem Polyurethan ein Epoxidharz.

Das Epoxidharz ist eine polymere Verbindung mit vorzugsweise mindestens 2, besonders bevorzugt 2 bis 4, ganz besonders 2 Epoxidgruppen.

Das Epoxidharz ist erhältlich durch Umsetzung von Epoxidgruppen enthaltenden Verbindungen mit Di- oder Polyolen. Als Epoxidgruppen enthaltende Verbindung sind insbesondere solche geeignet, die an einem zur Epoxidgruppe benachbarten C-Atom durch ein Halogenatom, insbesondere ein Chloratom substituiert sind, vorzugsweise sei hier Epichlorhydrin genannt. Durch Umsetzung dieser Verbindungen mit Di- oder Polyolen werden Epoxidharze mit endständigen Epoxidgruppen erhalten.

Als Diole oder Polyole sind aromatische Verbindungen bevorzugt. Bevorzugt sind Diole. Besonders bevorzugt ist Bisphenol A als Diol.

Besonders bevorzugte Epoxyharze sind Umsetzungsprodukte von Epichlorhydrin mit Bisphenol A.

Geeignete Epoxidharze haben vorzugsweise ein zahlenmittleres Molgewicht zwischen 300 und 10000 g/mol, insbesondere 500 und 5000 g/mol.

Die Erweichungstemperatur geeigneter Epoxidharze liegt vorzugsweise zwischen 50 und 150°C, besonders bevorzugt zwischen 80 und 130°C.

Die Mengen des Polyurethanharzes A) und des Epoxidharzes B) betragen jeweils vorzugsweise jeweils 1 bis 99 Gew.-%.

Besonders bevorzugt beträgt die Menge des Polyurethanharzes 50 bis 99, besonders bevorzugt 60 bis 90 Gew.-%, insbesondere 65 bis 75 Gew.-%.

Die Menge des Epoxidharzes B) beträgt besonders bevorzugt 1 bis 50 Gew.-%, besonders bevorzugt 10 bis 40 Gew.-%, insbesondere 25 bis 35 Gew.-%.

Die Gewichtsangaben zum Polyurethan A) und Epoxidharz B) sind auf die Gewichtssumme von A) + B) bezogen.

Das Epoxidharzwird der Lösung des Polyurethan (siehe vorstehendes"Acetonverfahren") oder der Lösung des Polyurethan-Prepolymeren (siehe vorstehendes "Prepolymer-Mischverfahren") zugegeben, bevor die Dispergierung des Polyurethan bzw. Prepolymeren in Wasser erfolgt. Nach Zugabe des Epoxidharzes erfolgt dann der Zusatz von Wasser bzw. Dispergierung in Wasser wie oben beschrieben und anschließend auch die weitere Umsetzung des Prepolymeren wie oben beschrieben.

Die Zusammensetzung enthält (C) weiterhin einen Vernetzer für das Epoxidharz.

Bei dem Vernetzer handelt es sich insbesondere um eine Verbindung mit mindestens zwei reaktiven Gruppen, welche mit Epoxygruppen reagieren. Bei diesen reaktiven Gruppen kann es sich z.B. um Amino-, Carboxyl- oder Hydroxylgruppen handeln. Bevorzugt sind Aminogruppen.

Der Vernetzer ist vorzugsweise in Wasser emulgierbar, dispergierbar oder löslich. Insbesondere ist der Vernetzer in Wasser löslich, d.h. bei 21°C lösen sich mindestens 100 g Vernetzer, bzw. mindestens 300 g Vernetzer in 1000 g Wasser.

Vorzugsweise handelt es sich um Verbindungen mit 2 bis 6 reaktive Gruppen, insbesondere 2 bis 4 reaktive Gruppen, besonders bevorzugt 2 oder 3 reaktive Gruppen.

Geeignet sind z.B. Polyisocyanate, insbesondere die oben aufgeführten Diisocyanate.

Geeignet sind ebenfalls aromatische oder aliphatische Polyole, insbesondere auch Diole. Insbesondere in Betracht kommen auch Alkylendiole wie Butandiol, Hexandiol etc..

Entsprechend kommen auch aromatische oder aliphatische Polycarbonsäuren, insbesondere Dicarbonsäuren oder Anhydride der Poly- oder Dicarbonsäuren in Betracht.

Geeignete Aminverbindungen sind z.B. aliphatische oder aromatische Verbindungen mit primären oder sekundären, vorzugsweise primären Aminogruppen.

Die reaktiven Gruppen des Vernetzers können aber auch blockiert sein; in diesem Fall wird die reaktive Gruppe erst durch eine Deblockierungsreaktion freigesetzt, welche bei erhöhten Temperaturen im allgemeinen oberhalb 50°C, insbesondere oberhalb 80°C abläuft.

Die wässrigen Zusammensetzungen eignen sich sowohl als 1K oder 2K Systeme. 1K-Systeme enthalten den Vernetzer und sind lagerstabil; bei 2K-Systemen wird der Vernetzer erst kurz vor der Verwendung zugesetzt. Bei der vorliegenden Erfindung eignen sich auch Zusammensetzungen mit nicht-blockierten Gruppen des Vernetzers als 1K-System.

Die Amine können z.B. mit Carbonsäuren blockiert sein und liegen dann als Säureamide vor.

Der Vernetzer kann bereits dem Polyurethan, dem Epoxidharz oder erst dem Gemisch der beiden zugesetzt werden.

Im Falle eines Vernetzers mit freien reaktiven Gruppen erfolgt die Zugabe erst kurz vor der weiteren Verarbeitung.

Bei einem Vernetzer mit blockiertem reaktiven Gruppen ist das Gemisch aus A), B) und C) lagerstabil.

Die Zugabe kann daher zu einem beliebigen Zeitpunkt und die Verwendung als Klebstoff zu einem beliebigen späteren Zeitpunkt erfolgen.

Die Menge des Vernetzers wird insbesondere so gewählt, dass das Molverhältnis der Epoxygruppen von B) zu den reaktiven Gruppen von C) 0,1 : 1 bis 1 : 0,1 besonders bevorzugt von 0,5 : 1 bis 1 : 0,5, insbesondere 0,8 : 1 bis 1 : 0,8 beträgt.

Die wässrige Zusammensetzung kann noch andere Vernetzer z.B. Vernetzer für das Polyurethan A), wie Isocyanate, Carbodiimide oder Aziridine enthalten.

Die wässrigen Zusammensetzungen eignen sich als Bindemittel für Beschichtungsmittel, Imprägniermittel oder Klebstoffe und können für diese Verwendungen weitere Hilfs- und Zusatzstoffe wie Treibmittel, Entschäumer, Emulgatoren, Verdickungsmittel und Thixotropiermittel sowie Farbmittel wie Farbstoffe und Pigmente enthalten.

Die wässrigen Zusammensetzungen eignen sich zur Beschichtung von Gegenständen aus Metall, Kunststoff, Papier, Textil, Leder oder Holz, indem man sie nach den allgemein üblichen Verfahren, also z.B. durch Sprühen oder Rakeln in Form eines Films auf diese Gegenstände aufträgt und trocknet. Die Trocknung kann bei Raumtemperatur oder auch bei erhöhter Temperatur erfolgen.

Insbesondere eignen sich die Zusammensetzungen als Klebstoffe, besonders bevorzugt als Kaschierklebstoffe. Zu unterscheiden ist dabei zwischen den 1K und 2K-Systemen (siehe oben).

Gegenstände aus Metall, Kunststoff, Papier, Leder oder Holz lassen sich ebenfalls mit anderen Gegenständen, vorzugsweise den vorgenannten Gegenständen, verkleben, indem man die wässerige Dispersion in Form eines Films auf mindestens einem dieser Gegenstände aufträgt und ihn vor oder nach dem Trocknen des Films mit einem anderen Gegenstand zusammenfügt. Vorzugsweise wird dabei der Film auf Temperaturen von 50 bis 150°C erhitzt.

Bei der Verwendung als Kaschierklebstoff werden Polymerfolien, Papier, insbesondere Dekorpapiere, welche mit einem Polymer getränkt oder beschichtet sind, oder Leder insbesondere mit Gegenständen aus Holz, worunter auch gebundene Holzfasermaterialien wie Spanplatten oder sonstige Platten aus Zellulosematerialien verstanden werden, Metall oder Kunststoff verklebt, zum Beispiel werden Möbel, bzw. Möbelteile mit Papier oder Polymerfolien kaschiert oder Automobilinnenteile mit Polymerfolien kaschiert.

Bei den 1K-Systemen ist es auch möglich, die Zusammensetzung zunächst auf die zu kaschierende Polymerfolie oder das zu kaschierende Papier aufzubringen und die beschichtete Polymerfolie bzw. das beschichtete Papier zu lagern bis zu einem späteren Zeitpunkt die Kaschierung, z.B. des Möbelteils oder Automobilinnenteil erfolgen soll.

Bei der Verwendung der Zusammensetzung als Klebstoff oder Kaschierklebstoff werden Verbunde mit hoher Festigkeit, insbesondere auch hoher Wärmestandfestigkeit, d.h. Festigkeit bei erhöhter Temperatur, erhalten. Die Zusammensetzungen sind als 1K-System (Vernetzer mit blockierten reaktiven Gruppen) lagerstabil und können auf die zu kaschierenden Polymerfolien oder Papier aufgebracht und so gelagert werden.

### Beispiele

### I) Herstellung der Dispersionen

### Beispiel 1: Herstellung einer Polyurethan/Epoxid-Dispersion

485 g eines Polyesterdiols aus Adipinsäure und Butandiol-1,4 (OHZ=46), 0,025 g DBTL und 130 g Aceton werden vorgelegt und bei 60°C 23,7 g TDI zugegeben und 60 min bei 65°C umgesetzt. Dann werden 22,9 g HDI zugesetzt und noch 3 h 52 min weiterreagiert. Es wird mit 520 g Aceton verdünnt und auf 50°C abgekühlt. Der NCO-Gehalt beträgt 0,53 %. Es wird mit 25,3 g einer 40 %igen wässrigen Lösung eines Adduktes von Ethylendiaminan Na-Acrylat kettenverlängert. Nach 5 min wird mit 400 g Wasser verdünnt und 233 g Epikote 1007 (Epoxid auf Basis Bisphenol A) gelöst in 233 g Aceton zugesetzt, gut verrührt und mit 550 g Wasser weiterdispergiert.

Das Aceton wird im Vakuum bei Temperaturen bis 42°C abdestilliert und der Feststoffgehalt auf 45 % eingestellt.

### Beispiel 2:

731,7 g eines Polyesterdiols aus Adipinsäure und Butandiol-1,4 (OHZ=46), 26,8 g DMPA, 0,1 g Dibutylzinndilaurat und 100 g Aceton werden vorgelegt und bei 60°C 84,1 g HDI zugegeben und 6 h 14 min bei 65°C weiterreagiert. Es wird mit 900 g Aceton verdünnt und auf 50°C abgekühlt. Der NCO-Gehalt beträgt 0,17 %. Es wird mit 12,1 g Triethylamin neutralisiert und mit 200 g Wasser verdünnt. Dann werden 95 g Rütapox 0194 (Epoxid auf Basis Bisphenol A) gelöst in 95 g Aceton zugesetzt, gut verrührt und mit 1230 g Wasser weiterdispergiert.

Das Aceton wird im Vakuum bei Temperaturen bis 42°C abdestilliert und der Feststoffgehalt auf 40 % eingestellt.

### Vergleichsbeispiel ohne Epoxid:

Luphen® D 200 A: ein handelsüblicher Polyurethankaschierklebstoff ohne Epoxid

### II) Herstellung der Klebstoff-Zusammensetzung

Durch Abmischung der Bestandteile gemäß nachstehender Tabelle wurden Klebstoff-Zusammensetzungen hergestellt. Die Zahlenangaben sind Gewichtsteile (fest).

| Formulierungen: | A | B | C |
|---|---|---|---|
| Beispiel 2 | 100 | | |
| Luphen D 200 A | | | 100 |
| Beispiel 1 | | 100 | |
| Borchigel L 75 N¹⁾ | 2 | 2 | 2 |
| Basonat F 200 WD²⁾ | | | 5 |
| N-(3-Aminopropyl)imidazol³⁾ | 0,5 | 0,5 | |

| | | | |
|---|---|---|---|
| ¹⁾ Verdicker aus Polyurethan ²⁾ Polyisocyanat-Vernetzer ³⁾ Amin-Vernetzer für Epoxid | | | |

### III Anwendungstechnische Prüfungen

### A) Folienvorbeschichtung

Für diesen Test wurden Kaschierfolien aus thermoplastischem Polyethylen (TPO) mit den Formulierungen auf der Rückseite beschichtet. Die beschichteten Folien wurden einmal direkt nach dem Trocknen der Beschichtung und einmal nach 2 Wochen Lagerung der beschichteten Folien auf Prüfkörper aus Buchenholz (BH) oder ABS kaschiert. Kaschierbedingungen: Die Prüfkörper wurden im Wärmeschrank auf die Kaschiertemperatur (ABS: 70°C, BH 150°C) aufgeheizt. Anschließend wurde die beschichtete Folie mittels Druck (5 bar) aufkaschiert. Die Prüfung der Verbunde erfolgte in einem 180°C Schältest mit einer Schälgeschwindigkeit von 100 mm/min. Die Schälfestigkeit (bei 21°C) ist in N/mm angegeben:

| Klebstoff | Sofort nach Beschichtung | | Nach 2 Wochen Lagerung der beschichteten Folie | |
|---|---|---|---|---|
| | BH | ABS | BH | ABS |
| A | 2,2 | 2,1 | 2,1 | 2,3 |
| B | 2 | 0,4 | 1,8 | 0,7 |
| C | 2,3 | 0,5 | 1,1 | 0,4 |

Bei den erfindungsgemäßen Klebstoffen A und B fallen die Werte auch nach 2 Wochen Lagerung der beschichteten Folie gegenüber den Ausgangswerten kaum ab.

### B) Kaschierklebstoffe (Alle Prüfungen: Weich-PVC-Folie kaschiert auf ABS)

| | |
|---|---|
| Substrat: | ABS (FORD Flour Grain 089/30 - 40 µm) / Weich-PVC-Folie v. Fa. Benecke (TWIST-AUDI SF 5227/040 SE) 1 mm |
| Auftrag: | 1 mm Zahnrakel |
| Trocknung: | 90 min bei Raumtemperatur (RT) |
| Kaschierung: | BIMA-Laborpresse 40 sec mit 0,1 N/mm², Heizung oben: 90°C (letzte 14,9 sec 65 - 68,8°C) |
| Schälfestigkeit: | 5 Tage bei Raumtemperatur und 10 Tage Lagerung bei 100°C; danach Prüfung mit Rollenschälgerät in der Klimakammer mit 100°C |

| Klebstoff | Kaschierung sofort nach Herstellung des Klebstoffes | | Kaschierung erst nach 72 h Lagerung des Klebstoffs | |
|---|---|---|---|---|
| | vor Lagerung | nach Lagerung | vor Lagerung | nach Lagerung |
| A | 0,2 | 0,23 | 0,46 | 0,34 |
| B | 0,3 | 0,37 | 0,69 | 0,15 |
| C | 0,3 | 0,16 | koaguliert | koaguliert |

Bei Lagerung des Klebstoffs vor der Kaschierung konnten bei C keine Werte mehr erhalten werden. Der Klebstoff C ist nicht lagerstabil.

## Patentansprüche

1. Verwendung von mit Kaschierklebstoff beschichteten Polymerfolien oder Papier für die Kaschierung von flächigen Substraten, insbesondere von Möbeln oder Automobilinnenteilen, wobei die mit Kaschierklebstoff beschichteten Polymerfolien oder Papier erhältlich sind durch Verwendung einer wässrigen Zusammensetzung, enthaltend
- ein Polyurethan (A)
- ein Epoxidharz (B), erhältlich durch Umsetzung von Verbindungen mit Epoxidgruppen mit Di- oder Polyolen und
- einen Vernetzer für das Epoxidharz (C),
wobei die wässrige Zusammensetzung dadurch erhältlich ist, dass das Polyurethan in einem Lösungsmittel hergestellt und anschließend in Wasser dispergiert wird, wobei das Epoxidharz der Lösung vor dem Dispergieren des Polyurethans in Wasser zugesetzt wird.

2. Verwendung gemäß Anspruch 1 für die Kaschierung von Holz mit Papier oder Polymerfolien.

3. Verwendung gemäß Anspruch 1 oder 2, **dadurch gekennzeichnet, dass** das Polyurethan in Form einer wässrigen Dispersion vorliegt.

4. Verwendung gemäß einem der Ansprüche 1 bis 3, **dadurch gekennzeichnet, dass** das Polyurethan aufgebaut ist aus
a) Diisocyanaten,
b) Diolen, von denen
b₁) 10 bis 100 mol-%, bezogen auf die Gesamtmenge der Diole (b), ein Molekulargewicht von 500 bis 5000 aufweisen, und
b₂) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

5. Verwendung gemäß einem der Ansprüche 1 bis 4, **dadurch gekennzeichnet, dass** es sich bei dem Epoxidharz um ein Umsetzungsprodukt von Bisphenol A mit Epichlorhydrin handelt.

6. Verwendung gemäß einem der Ansprüche 1 bis 5, **dadurch gekennzeichnet, dass** es sich bei dem Vernetzer C) um eine Verbindung mit mindestens zwei reaktiven Gruppen handelt, welche mit Epoxiden reagieren, z.B. Isocyanat-, Amino-, Carboxyl- oder Hydroxylgruppen, vorzugsweise Aminogruppen.

7. Verwendung gemäß Anspruch 6, **dadurch gekennzeichnet, dass** die reaktiven Gruppen bei Raumtemperatur blockiert oder desaktiviert sind.

8. Verwendung gemäß Anspruch 7, **dadurch gekennzeichnet, dass** es sich bei den Vernetzern um blockierte Aminverbindungen oder blockierte Isocyanatverbindungen (z.B. mit Methylethylketoxim) handelt.

9. Verwendung gemäß einem der Ansprüche 1 bis 8, wobei die wässrige Zusammensetzung
1 bis 99 Gew. % Polyurethan A) und
1 bis 99 Gew. % Epoxidharz B) bezogen auf die Summe von A) und B) enthält.

10. Verwendung gemäß einem der Ansprüche 1 bis 9 wobei die wässrige Zusammensetzung ein einkomponentiger Klebstoff (1K-System) ist, welcher den Vernetzer bereits enthält.

11. Verwendung gemäß einem der Ansprüche 1 bis 9, wobei die wässrige Zusammensetzung ein zweikomponentiger Klebstoff (2K-System) ist, bei dem der Vernetzer erst kurz vor der Verarbeitung zugesetzt wird.

12. Verwendung gemäß einem der Ansprüche 1 bis 11, **dadurch gekennzeichnet, dass** die wässrige Zusammensetzung auf das Papier oder die Polymerfolie aufgetragen wird und anschließend die Kaschierung erfolgt.

## Claims

1. The use of polymer films or paper coated with laminating adhesive, for laminating flat substrates, particularly furniture or automobile interior parts where the polymer films or paper coated with laminating adhesive can be obtained by use of an aqueous composition comprising
- a polyurethane (A),
- an epoxy resin (B) obtainable by reacting compounds having epoxide groups with diols or polyols, and
- a crosslinker (C) for the epoxy resin where the aqueous composition is obtainable by preparing the polyurethane in a solvent and then dispersing it in water, the epoxy resin being added to the solution before the polyurethane is dispersed in water.

2. The use according to claim 1 for laminating wood with paper or polymer films.

3. The use according to claim 1 or 2, wherein the polyurethane is in the form of an aqueous dispersion.

4. The use according to one of claims 1 to 3, wherein the polyurethane is synthesized from
a) diisocyanates,
b) diols of which
b₁₎ from 10 to 100 mol%, based on the total amount of diols (b), have a molecular weight of from 500 to 5000 and
b₂₎ from 0 to 90 mol%, based on the total amount of diols (b), have a molecular weight of from 60 to 500 g/mol,
c) non-(a) and non-(b) monomers having at least one isocyanate group or at least one group reactive toward isocyanate groups, and further carrying at least one hydrophilic or potentially hydrophilic group to make the polyurethanes dispersible in water,
d) optionally, further non-(a) to (c) polyfunctional compounds having reactive groups which are alcoholic hydroxyl, primary or secondary amino or isocyanate groups, and
e) optionally, non-(a) to (d) monofunctional compounds having a reactive group which is an alcoholic hydroxyl, a primary or secondary amino or an isocyanate group.

5. The use according to one of claims 1 to 4, wherein the epoxy resin is a reaction product of bisphenol A with epichlorohydrin.

6. The use according to one of claims 1 to 5, wherein the crosslinker C) is a compound having at least two reactive groups which react with epoxides, e.g., isocyanate, amino, carboxyl or hydroxyl groups, preferably amino groups.

7. The use according to claim 6, wherein the reactive groups are deactivated or blocked at room temperature.

8. The use according to claim 7, wherein the crosslinkers are blocked amine compounds or blocked isocyanate compounds (e.g., with methyl ethyl ketoxime).

9. The use according to one of claims 1 to 8, where the aqueous composition comprises
1 to 99% by weight of polyurethane A) and
1 to 99% by weight of epoxy resin B), based on the sum of A) and B).

10. The use according to one of claims 1 to 9, where the aqueous composition is a one-component adhesive (1K system) which already includes the crosslinker.

11. The use according to one of claims 1 to 9, where the aqueous composition is a two-component adhesive (2K system), for which the crosslinker is not added until shortly before use.

12. The use according to one of claims 1 to 11, wherein the aqueous composition is applied to the paper or the polymer film and then lamination takes place.

## Revendications

1. Utilisation de films polymères ou de papiers revêtus avec un adhésif de contre-collage pour le contre-collage de substrats plats, notamment de meubles ou de parties intérieures d'automobiles, les films polymères ou papiers revêtus avec un adhésif de contre-collage pouvant être obtenus en utilisant une composition aqueuse, contenant :
- un polyuréthane (A),
- une résine époxyde (B), pouvant être obtenue par mise en réaction de composés contenant des groupes époxyde avec des di- ou polyols, et
- un agent de réticulation pour la résine époxyde (C),
la composition aqueuse pouvant être obtenue en préparant le polyuréthane dans un solvant, puis en le dispersant dans de l'eau, la résine époxyde étant ajoutée à la solution avant la dispersion du polyuréthane dans de l'eau.

2. Utilisation selon la revendication 1 pour le contre-collage de bois avec du papier ou des films polymères.

3. Utilisation selon la revendication 1 ou 2, **caractérisée en ce que** le polyuréthane se présente sous la forme d'une dispersion aqueuse.

4. Utilisation selon l'une quelconque des revendications 1 à 3, **caractérisée en ce que** le polyuréthane est formé à partir de :
a) des diisocyanates,
b) des diols, parmi lesquels
b₁) 10 à 100 % en moles, par rapport à la quantité totale des diols (b), présentent un poids moléculaire de 500 à 5 000, et
b₂) 0 à 90 % en moles, par rapport à la quantité totale des diols (b), présentent un poids moléculaire de 60 à 500 g/mol,
c) des monomères différents des monomères (a) et (b), contenant au moins un groupe isocyanate ou au moins un groupe réactif avec les groupes isocyanate, qui portent en outre au moins un groupe hydrophile ou un groupe potentiellement hydrophile, qui réalise la dispersibilité dans l'eau des polyuréthanes,
d) éventuellement d'autres composés polyvalents différents des monomères (a) à (c), contenant des groupes réactifs qui consistent en des groupes hydroxyle alcooliques, des groupes amino primaires ou secondaires ou des groupes isocyanate, et
e) éventuellement des composés monovalents différents des monomères (a) à (d), contenant un groupe réactif qui consiste en un groupe hydroxyle alcoolique, un groupe amino primaire ou secondaire ou un groupe isocyanate.

5. Utilisation selon l'une quelconque des revendications 1 à 4, **caractérisée en ce que** la résine époxyde consiste en un produit de réaction de bisphénol A avec de l'épichlorhydrine.

6. Utilisation selon l'une quelconque des revendications 1 à 5, **caractérisée en ce que** l'agent de réticulation C) consiste en un composé contenant au moins deux groupes réactifs, qui réagissent avec les époxydes, p. ex. des groupes isocyanate, amino, carboxyle ou hydroxyle, de préférence des groupes amino.

7. Utilisation selon la revendication 6, **caractérisée en ce que** les groupes réactifs sont bloqués ou désactivés à température ambiante.

8. Utilisation selon la revendication 7, **caractérisée en ce que** les agents de réticulation consistent en des composés d'amine bloqués ou en des composés d'isocyanate bloqués (p. ex. avec du méthyléthylcétoxime).

9. Utilisation selon l'une quelconque des revendications 1 à 8, dans laquelle la composition aqueuse contient :
1 à 99 % en poids de polyuréthane A) et
1 à 99 % en poids de résine époxyde B), par rapport à la somme de A) et B).

10. Utilisation selon l'une quelconque des revendications 1 à 9, dans laquelle la composition aqueuse est un adhésif monocomposant (système 1K), qui contient déjà l'agent de réticulation.

11. Utilisation selon l'une quelconque des revendications 1 à 9, dans laquelle la composition aqueuse est un adhésif bicomposant (système 2K), auquel l'agent de réticulation est ajouté peu avant l'usinage.

12. Utilisation selon l'une quelconque des revendications 1 à 11, **caractérisée en ce que** la composition aqueuse est appliquée sur le papier ou le film polymère, puis le contre-collage a lieu.
